(19) Europäisches Patentamt

European Patent Office

Office européen des brevets

(11) Veröffentlichungsnummer: **0 221 550 B1**

## (12) EUROPÄISCHE PATENTSCHRIFT

(45) Veröffentlichungstag der Patentschrift: **20.05.92**

(21) Anmeldenummer: **86115364.1**

(22) Anmeldetag: **05.11.86**

(51) Int. Cl.⁵: **G02B 6/38**, G02B 6/44

(54) **Aufnahmeeinrichtung für Lichtwellenleiter-Spleissverbindungen.**

(30) Priorität: **08.11.85 DE 3539707**

(43) Veröffentlichungstag der Anmeldung:
**13.05.87 Patentblatt 87/20**

(45) Bekanntmachung des Hinweises auf die
Patenterteilung:
**20.05.92 Patentblatt 92/21**

(84) Benannte Vertragsstaaten:
**AT BE CH DE FR GB IT LI NL SE**

(56) Entgegenhaltungen:
**DE-A- 2 505 027**
**DE-A- 3 306 502**
**FR-A- 2 517 077**
**US-A- 3 777 154**
**US-A- 4 029 390**

(73) Patentinhaber: **SIEMENS AKTIENGESELL-
SCHAFT**
**Wittelsbacherplatz 2**
**W-8000 München 2(DE)**

(72) Erfinder: **Parstorfer, Richard**
**Eschenstrasse 5**
**W-8085 Geltendorf(DE)**

## Beschreibung

Die Erfindung betrifft eine Aufnahmeplatte für Spleißverbindungen von Lichtwellenleitern mit einem parallel angeordnete Führungsnuten zum Führen der Lichtwellenleiter aufweisenden Spleißplattenbereich und mit zur Lagefixierung der Lichtwellenleiter mit Klebematerial beschichteten Zonen.

Eine Aufnahmeeinrichtung dieser Art ist aus der US-A-4 029 390 bekannt. Dabei ist das Klebematerial im Bereich der Führungsnuten vorgesehen. Da die dort befindlichen Führungsnuten mit minimalen Toleranzen ausgebildet werden müssen, um die notwendige exakte Ausrichtung der Lichtwellenleiter zu gewährleisten, hat jedes Material das in diese Führungsnuten eingebracht wird, direkt einen Einfluß auf die Qualität der fluchtenden Ausrichtung und damit auch auf die Dämpfung an der Stoßstelle zwischen den Lichtwellenleitern. Weiterhin hat diese Lösung den Nachteil, daß immer die Gefahr besteht, daß ein Teil des Klebematerials bis in den Bereich der Stoßstelle der zu spleißenden Lichtwellenleiter vordringt und dort die Lichtübertragung behindert. Dies gilt vor allem dann, wenn besonders dünnflüssige Kleber verwendet werden, was ja wegen der ebenfalls in den Abmessungen sehr kleinen Führungsnuten praktisch unerläßlich ist. Zusätzlich ergibt sich bei der bekannten Einrichtung der Nachteil, daß die als Klebematerial vorgesehenen Epoxi-Kleber aushärten und dadurch die Lichtwellenleiter unverrückbar in ihrer Position festhalten. Eine nachträgliche Entnahme z.B. bei Feststellung einer zu großen Durchgangsdämpfung im Bereich einer Stoßstelle, ist somit bei der bekannten Anordnung nicht mehr möglich, da die Lichtwellenleiter fest mit der Spleißplatte verklebt sind.

Der vorliegenden Erfindung liegt die Aufgabe zugrunde, in besonders einfacher und schonender Weise eine Halterung der Lichtwellenleiter zu erreichen. Dies wird gemäß der Erfindung bei einer Aufnahmeeinrichtung der eingangs genannten Art dadurch erreicht, daß die beschichteten Zonen durch je eine, beidseits des Spleißplattenbereichs mit je einer quer zu den Führungsnuten verlaufenden Vertiefung in der Aufnahmeplatte gebildet sind, deren Boden mit Haftkleber beschichtet ist, und daß die Dimensionierung der Vertiefungen so gewählt ist, daß ein in die Führungsnuten eingelegter Lichtwellenleiter den Haftkleber mit Sicherheit noch berührt.

Als zusätzlicher Aufwand ist somit bei der Erfindung lediglich die Aufbringung eines Haftklebers erforderlich, der in einem einfachen Arbeitsvorgang aufgetragen werden kann. Da die Halterung mittels des Haftklebers zu keiner größeren mechanischen Beanspruchung der Lichtwellenleiter führt, weil sie der Halterung mittels eines Spleißkammes entspricht, ist sichergestellt, daß keine unzulässig hohen mechanischen Beanspruchungen ausgeübt werden. Die Anbringung des Haftklebers erfolgt außerhalb der Führungsnuten, so daß der Haftvorgang keinen unerwünschten Einfluß auf die Ausrichtung der Lichtwellenleiter und damit die Qualität der Spleißstelle hat. Durch die Erfindung sind auch besonders klar definierte Haftbereiche für die Lichtwellenleiter vorgesehen und die Einbringung des Haftklebers in diese Vertiefungen läßt sich in einfacher und zuverlässiger Weise durchführen.

Sonstige Weiterbildungen der Erfindung sind in Unteransprüchen wiedergegeben.

Die Erfindung und ihre Weiterbildungen werden nachfolgend anhand von Zeichnungen näher erläutert. Es zeigen

Figur 1    in Draufsicht eine Aufnahmeeinrichtung nach der Erfindung und

Figur 2    die Seitenansicht der Einrichtung nach Figur 1.

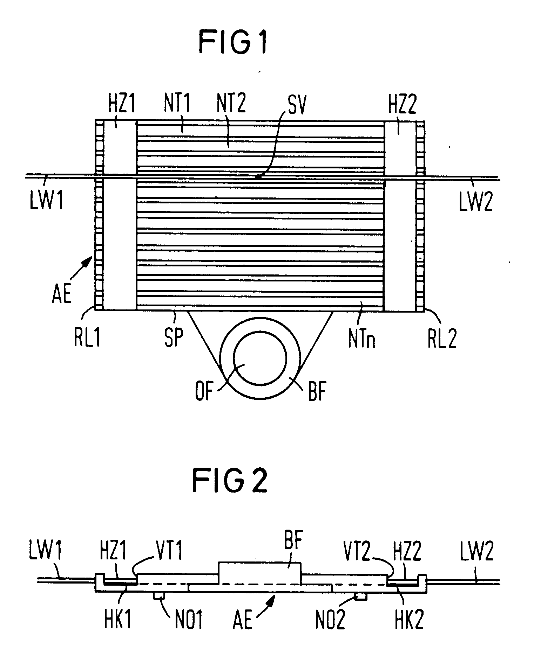

Die Aufnahmeeinrichtung AE nach Figur 1 und 2 weist eine Reihe von exakt dimensionierten Nuten NT1 bis NTn auf, die parallel zueinander angeordnet sind. In diese Nuten werden entsprechende Lichtwellenleiter eingelegt, wobei die Spleißverbindung SV (vorzugsweise in Form einer Schweißverbindung) etwa in der Mitte der Aufnahmeeinrichtung AE zu liegen kommt. In vorliegendem Beispiel sind zur Vereinfachung der Darstellung nur zwei Lichtwellenleiter gezeichnet und mit LW1 und LW2 bezeichnet. Die Spleißverbindungsstelle SV dieser beiden Lichtwellenleiter liegt etwa in der Mitte der Aufnahmeeinrichtung AE und zwar in einem Bereich, der als Spleißplattenbereich anzusprechen und mit SP bezeichnet ist. Die Aufnahmeeinrichtung AE weist außerdem ein seitliches Befestigungsteil BF auf, welches mit einer Öffnung OF versehen ist, mittels der es in einer hier nicht dargestellten Spleißkassette oder dergleichen mechanisch gehalten werden kann. An der Unterseite der Aufnahmeeinrichtung AE sind Nocken NO1 und NO2 angebracht, welche eine Verdrehungssicherung für die Aufnahmeeinrichtung bilden und in entsprechenden Vertiefungen z.B. einer Spleißkassette gehalten sind.

Die Nuten NT1 bis NTn weisen zweckmäßig etwa V-förmigen Querschnitt auf, wobei es erwünscht ist, daß die Lichtwellenleiter LW1 und LW2 eine zusätzliche Halterung in der Art eines Spleißkammes erfahren. Dies wird dadurch erreicht, daß in den Randbereichen der Aufnahmeeinrichtung AE zwei Vertiefungen VT1, VT2 vorgesehen sind, die quer zu den Längsachsen der Nuten NT1 bis NTn verlaufen. Am Boden dieser Vertiefungen VT1 und VT2 ist ein Belag von Haftkleber HK1 und HK2 angebracht, so daß Haltezonen HZ1, HZ2 entstehen, deren Breite vorteilhaft zwischen 2 und 5 mm gewählt wird. Dabei ist die Dimensionierung der Vertiefungen VT1 und VT2 so vorgenommen, daß die eingelegten Lichtwellenleiter LW1 und LW2 mit dem Haftkleber HK1 und HK2 im eingelegten Zustand in Kontakt kommen und dadurch eine Halterung in der Art eines Spleißkammes erfahren. Die rinnenförmigen Vertiefungen VT1 und VT2 lassen sich in einfacher Weise mit dem Haftkleber HK1 und HK2 beschichten und die Lichtwellenleiter LW1 und LW2 werden ausreichend zuverlässig jedoch ohne allzugroße mechanische Beanspruchungen in ihrer Position festgehalten. Im Außenbereich schließen sich an die Vertiefungen VT1 und VT2 noch zwei Randleisten RL1 und RL2 an, die ebenfalls mit nutenförmigen Vertiefungen versehen sind und eine zusätzliche Stabilisierung der Lichtwellenleiter bewirken. Im Bereich der Randleisten RL1 und RL2, im Bereich der Haltezonen HZ1, HZ2 und im äußeren Teil der Führungsnuten NT1 bis NTn (z.B. jeweils 5mm weit) sind an den Lichtwellenleitern LW1 und LW2 noch die Beschichtungen ("Coating") erhalten. Nur im Spleißbereich bei SV sind die Fasern blankgelegt.

Es ist an sich auch möglich, ohne eine Vertiefung VT1 und VT2 auszukommen und den Haftkleber direkt in die Führungsnuten NT1 bis NTn einzubringen. Dies führt jedoch insofern zu gewissen Schwierigkeiten, weil die Nuten sehr geringe Abmessungen haben, so daß eine ausreichend vollständige und allseitige Benetzung mit dem Haftkleber eine etwas größere Sorgfalt bei der Bearbeitung erfordert.

Das dargestellte Kammelement kann auch fester Bestandteil z.B. einer Kunststoffkassette sein.

## Patentansprüche

1. Aufnahmeplatte (AE) für Spleißverbindungen (SV) von Lichtwellenleitern (LW1, LW2) mit einem parallel angeordnete Führungsnuten (NT1-NTn) zum Führen der Lichtwellenleiter (LW1, LW2) aufweisenden Spleißplatten-Bereich (SP) und mit zur Lagefixierung der Lichtwellenleiter (LW1, LW2) mit Klebematerial (HK1, HK2) beschichteten Zonen, **dadurch gekennzeichnet,** daß die beschichteten Zonen durch je eine, beidseits des Spleißplattenbereichs (SP) angeordnete, mit je einer quer zu den Führungsnuten (NT1-NTn) verlaufenden Vertiefung (VT1, VT2) in der Aufnahmeplatte (AE) gebildet sind, deren Boden mit Haftkleber (HK1, HK2) beschichtet ist, und daß die Dimensionierung der Vertiefungen (VT1, VT2) so gewählt ist, daß ein in die Führungsnuten (NT1-NTn) eingelegter Lichtwellenleiter (LW1, LW2) den Haftkleber (HK1, HK2) mit Sicherheit noch berührt.

2. Aufnahmeeinrichtung nach Anspruch 1, **dadurch gekennzeichnet,** daß die Breite der Haftkleber-Zonen (HZ1, HZ22) zwischen 2 und 5 mm gewählt ist.

3. Aufnahmeeinrichtung nach einem der vorhergehenden Ansprüche, **dadurch gekennzeichnet,** daß außen im Anschluß an die Vertiefungen (VT1, VT2) noch jeweils eine ebenfalls Führungsnuten aufweisende Randleiste (RL1, RL2) vorhanden ist.

## Claims

1. Receptacle plate (AE) for splice connections (SV) of light waveguides (LW1, LW2) comprising a splicing plate region (SP) having guide grooves (NT1-NTn) arranged in parallel for guiding the light waveguides (LW1, LW2) and comprising zones coated with adhesive material (HK1, HK2) in order to fix the position of the light waveguides (LW1, LW2), characterised in that the coated zones are formed in each case by a depression (VT1, VT2) arranged on either side of the splicing plate region (SP) and extending in each case at right angles relative to the guide grooves (NT1-NTn), in the receptacle plate (AE), the base of which is coated with contact adhesive (HK1, HK2), and in that the dimensioning of the depressions (VT1, VT2) is selected so that a light waveguide (LW1, LW2) inserted into the guide grooves (NT1-NTn) is still certain to touch the contact adhesive (HK1, HK2).

2. Receptacle according to Claim 1, characterised in that the width of the contact-adhesive zones (HZ1, HZ2) is selected to be between 2 and 5 mm.

3. Receptacle according to one of the preceding claims, characterised in that adjoining the depressions (VT1, VT2) on the outside there is further in each case an edge strip (RL1, RL2) likewise having guide grooves.

## Revendications

1. Plaque de logement (AE) pour des épissures (SV) de guides d'ondes optiques (LW1,LW2) comportant une zone (SP) d'une plaque d'épissure possédant des rainures parallèles de guidage (NT1-NTn) servant à guider les guides d'ondes optiques (LW1,LW2), et des zones recouvertes d'un produit adhésif (HK1,HK2) pour la fixation en position des guides d'ondes optiques (LW1,LW2),

caractérisée par le fait

que les zones recouvertes sont formées respectivement dans un renfoncement (VT1,VT2) qui est disposé des deux côtés de la zone (SP) de la plaque d'épissure et s'étend transversalement par rapport aux rainures de guidage (NT1-NTn), dans la plaque réceptrice (AE), et dont le fond est recouvert par une masse auto-adhésive (HK1,HK2), et

que le dimensionnement des renfoncements (VT1,VT2) est choisi de telle sorte qu'un guide d'ondes optiques (LW1,LW2) introduit dans les rainures de guidage (NT1-NTn) n'est pas encore en contact, de façon sûre, avec la masse auto-adhésive (HK1,HK2).

2.   Dispositif de logement suivant la revendication 1, caractérisé par le fait que la largeur des zones (HZ1,HZ22) des masses auto-adhésives est choisie entre 2 et 5 mm.

3.   Dispositif de logement suivant l'une des revendications précédentes, caractérisé par le fait qu'à la suite des renfoncements (VT1,VT2) est en outre disposée, extérieurement, respectivement une barrette marginale (RL1,RL2) possédant également des rainures de guidage.

# FIG 1

# FIG 2